# EUROPEAN PATENT APPLICATION

(11) **EP 4 564 541 A1**
(43) Date of publication of application: **04.06.2025**
(21) Application number: 23846443.2
(22) Date of filing: 24.07.2023
(51) Int. Cl.: H01M 50/105, C09J 4/02, C09J 175/14, H01M 50/121, H01M 50/129, H01M 50/131, H01M 50/169

(54) **BATTERY PACKAGING MATERIAL**

(30) Priority: 28.07.2022 JP 2022120392
(71) Applicant: Resonac Packaging Corporation, Shiga 529-1156 (JP)
(72) Inventor: HE, Wei, Hikone-shi, Shiga 529-1156 (JP); KUMAKI, Terutoshi, Hikone-shi, Shiga 529-1156 (JP)
(74) Representative: Hoffmann Eitle
(86) International application number: PCT/JP2023/026963
(87) International publication number: WO 2024/024713

(57) **Abstract**

Adhesive strength at high temperatures is improved in a battery packaging material using an active energy-curing adhesive. A battery packaging material (1) in which a heat-resistant resin layer (13) is bonded to one side of a barrier layer (11) via a first adhesive layer (12) and a sealant layer (15) is bonded to the other side via a second adhesive layer (14). The first adhesive layer (12) is composed of an adhesive composition including a polyester polyurethane acrylate A and a (meth)acrylate monomer B having an isobornyl group in a mass ratio of A/B = 1/1 to 8/1.

## Description

### Technical Field

The present invention relates to a battery packaging material and its related technology, particularly suited for use as a case for secondary batteries such as those used in vehicles, stationary applications, laptops, mobile phones, and cameras, especially lithium-ion secondary batteries for small portable devices.

### Background Art

Power storage devices, such as lithium-ion secondary batteries, have become capable of being processed into various shapes by using laminated packaging materials, which is composed of a resin layer laminated on both sides of a metal foil such as an aluminum foil, instead of conventional cans or cases. This also allows for thinner and lighter designs.

Laminate-type battery packaging materials are known to have a resin film for heat-resistant layer resin films, which forms the outer surface of the case, adhered to one side of a metal foil using an adhesive, and a sealant layer resin film adhered to the other side of the metal foil using an adhesive. Various adhesives have been used for this purpose.

In conventional battery packaging materials, it has been common to use a two-part curing type urethane adhesive to bond the metal foil to the resin film for heat-resistant resin layers. However, this method requires a heat aging process of 7 to 9 days for curing, which results in poor productivity and requires a large aging room, leading to high equipment costs. For this reason, battery packaging materials have been proposed in which an electron beam curing adhesive is used instead of a two-part curing type urethane-based adhesive. This approach eliminates the heat aging process, significantly shortens the curing time, and does not require large equipment (see Patent Document 1).

### Prior Art Document

### Patent Document

Patent Document 1: Japanese Patent No. 5704298

### SUMMARY OF THE INVENTION

### Problems to be Solved by the Invention

The battery packaging material described in Patent Document 1 has been improved in productivity since the adhesive cures quickly when exposed to electron beam irradiation. However, the battery packaging material tends to cause delamination between the metal foil and the heat-resistant resin layer that serves as the outer surface of the case when deep drawing is performed to produce the battery case. Additionally, delamination between the metal foil and the heat-resistant resin layer is also likely to occur during heat sealing when sealing the battery case or when the battery is used under harsh conditions such as high temperature and high humidity.

### Means for Solving the Problems

The present invention aims to improve the adhesive strength at high temperatures in battery packaging materials that use an electron beam curing type adhesive, which cures in a short time, in view of the background technology described above.

That is, the present invention has the configuration described in the following Items [1] to [7].
[1] A battery packaging material in which a heat-resistant resin layer is bonded to one side of a barrier layer via a first adhesive layer, and a sealant layer is bonded to the other side of the barrier layer via a second adhesive layer, characterized in that
   the first adhesive layer is composed of an adhesive composition containing a polyester polyurethane acrylate (A) and a (meth)acrylate monomer (B) having an isobornyl group in a mass ratio of (A)/(B) = 1/1 to 8/1.
[2] The battery packaging material as recited in the above-described Item 1,
   wherein the adhesive composition includes two or more types of polyester polyurethane acrylates (A) with different glass transition temperatures, and the glass transition temperature of at least one of the polyester polyurethane acrylates (A) is 40°C or lower.
[3] The battery packaging material as recited in the above-described Item [1] or [2],
   wherein the adhesive composition further includes at least one of an epoxy resin (C), an alkoxysilyl group-containing radical polymerizable compound (D), a phosphate group-containing (meth)acrylate (E), and a photo-cationic polymerization initiator (F).
[4] The battery packaging material as recited in the above-described Item [1] or [2],
   wherein the adhesive composition further includes at least one of 1 mass% to 10 mass% of the epoxy resin (C), 0.1 mass% to 5 mass% of the alkoxysilyl group-containing radical polymerizable compound (D), 0.1 mass% to 5 mass% of the phosphate group-containing (meth)acrylate (E), and 0.1 mass% to 5 mass% of the photo-cationic polymerization initiator (F).
[5] The battery packaging material as recited in any one of the above-described Item [1] to [4],
   wherein an underlying layer is formed at least on a heat-resistant resin layer side surface of the barrier layer.
[6] A battery case characterized in that the battery packaging materials as recited in the above-described Item [1] or [2] are fitted with the sealant layers facing inward, and edges of the the battery packaging materials are heat-sealed to form a battery element chamber for accommodating a battery element.
[7] A secondary battery characterized in that a battery element is accommodated in the battery element chamber of the battery case as recited in the above-described Item [6].

### Effects of the Invention

The battery packaging material as recited in the above-described Item [1] is configured such that the first adhesive layer, which bonds the barrier layer and the heat-resistant resin layer, is composed of an adhesive composition in which a polyester polyurethane acrylate (A) and a (meth)acrylate monomer (B) having an isobornyl group are mixed in a predetermined ratio. As a result, the first adhesive layer can be cured in a short time by exposure to active energy rays, and is excellent in adhesive properties and heat resistance. Accordingly, delamination between the barrier layer and the heat-resistant resin layer is prevented during heat sealing when sealing the battery case or when the battery is used in high-temperature environments.

According to the battery packaging material as recited in the above-described Item [2], the adhesive composition contains two or more types of polyester polyurethane acrylates (A) with different glass transition temperatures, and the glass transition temperature of at least one of the polyester polyurethane acrylates is 40°C or lower, thus enabling both adhesive properties and heat resistance of the first adhesive layer to be achieved.

According to the battery packaging material as recited in the above-described Items [3] and [4], heat resistance is further improved, or adhesive properties are enhanced.

According to the battery packaging material as recited in the above-described Item [5], the adhesiveness between the barrier layer and the heat-resistant resin layer is enhanced by the underlying layer, which improves the delamination prevention effect.

The battery case as recited in the above-described Item [6] is produced using the battery packaging material as recited in the above-described Item [1], which prevents delamination during heat sealing.

The battery as recited in the above-described Item [7] uses the battery case as recited in the above-described Item [6], which prevents delamination when used under high-temperature environments.

### BRIEF DESCRIPTION OF THE DRAWINGS

FIG. 1 is a cross-sectional view showing one example of a battery packaging material according to the present invention.
FIG. 2 is a cross-sectional view of another example of the battery packaging material according to the present invention.
FIG. 3 is a cross-sectional view of a battery case produced using the battery packaging material shown in FIG. 1.

### EMBODIMENTS FOR CARRYING OUT THE INVENTION

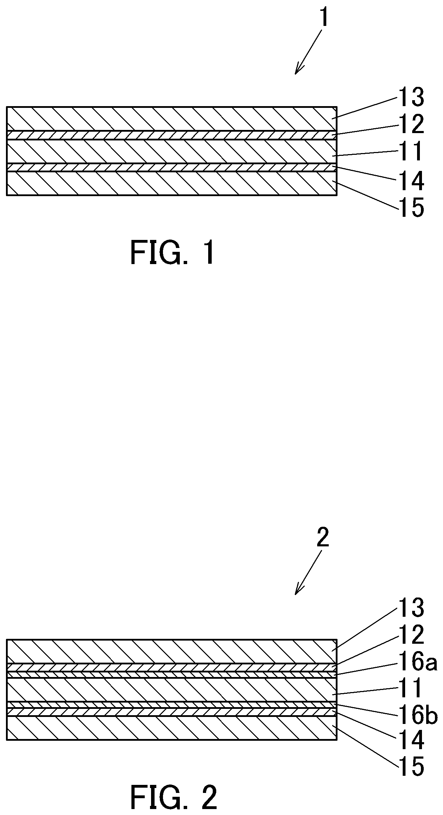

FIG. 1 shows one embodiment of the battery packaging material according to the present invention.

The battery packaging material 1 is configured such that a heat-resistant resin layer 13 is laminated on one side of a barrier layer 11 via a first adhesive layer 12, and a sealant layer 15 is laminated on the other side via a second adhesive layer 14.

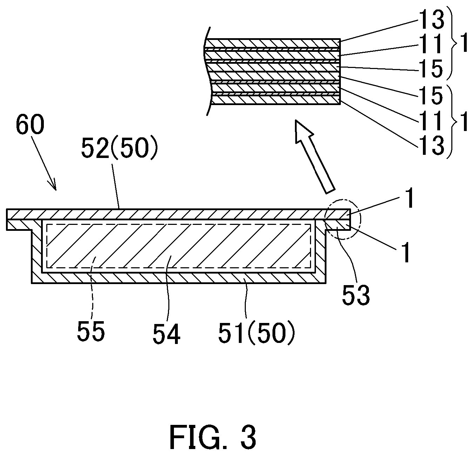

As shown in FIG. 3, the battery case 50 is produced by heat-sealing the edges of a formed container 51, made using the battery packaging material 1, and a lid plate 52, with their respective sealant layers 15 facing each other. The battery 60 has a battery element 55 sealed within a battery element chamber 54 of the battery case 50. In the produced battery case 50, the heat-resistant resin layer 13 serves as the outer layer, and the sealant layer 15 serves as the inner layer. In the present invention, when describing the position of each layer that constitutes the battery packaging material 1 in terms of direction, the direction in which the heat-resistant resin layer 13 is located is referred to as the outer side, and the direction in which the sealant layer 15 is located is referred to as the inner side.

The present invention defines an adhesive composition that constitutes the first adhesive layer 12 between the barrier layer 11 and the heat-resistant resin layer 13 of the battery packaging material 1.

### [Main Components of First Adhesive Layer]

The necessary condition for the adhesive composition that constitutes the first adhesive layer 1 is that the adhesive composition contains a polyester polyurethane acrylate (A) and a (meth)acrylate monomer (B) having an isobornyl group in a mass ratio of (A)/(B) = 1/1 to 8/1. The adhesive composition cures upon exposure to active energy and strongly bonds the barrier layer 11 and the heat-resistant resin layer 13.

The number of functional groups of acryloyl groups in the molecule of the polyester polyurethane acrylate (A) is not particularly limited, but from the viewpoint of adhesive properties between substrates, it is preferred that the number be 2 or more, preferably 2 to 4. When the number of acryloyl groups is less than 2, the crosslink density after curing is low, resulting in weak adhesive properties and heat resistance, and thus reduced practicality. When the number of functional groups of (meth)acryloyl groups exceeds 4, the crosslink density becomes high, resulting in weakened adhesive properties. Moreover, the number average molecular weight is not particularly limited, but is preferably in the range of 4,000 to 30,000. In cases where the number-average molecular weight is less than 4,000, the molecular weight between crosslinking points becomes low, resulting in a loss of flexibility and weakened adhesion. When the number average molecular weight exceeds 30,000, the viscosity becomes high, and the applicability for coating decreases, making it impractical. Furthermore, due to the high molecular weight between cross-linking points, the material becomes too soft after curing, resulting in weakened adhesive properties. The number average molecular weight in the present invention is measured by gel permeation chromatography (GPC).

The (meth)acrylate monomer (B) having the isobornyl group has the effect of improving the heat resistance of the cured film of the active energy-curing type adhesive composition by reducing the atomic vibration degree of freedom and preventing molecular motion due to its ring structure, thereby improving the heat resistance of the first adhesive layer 12, which in turn prevents the delamination between the barrier layer 11 and the heat-resistant resin layer 13. Examples of (meth)acrylate monomers (B) having the isobornyl group include isobornyl acrylate, isobornyl methacrylate, and the like.

The polyester polyurethane acrylate (A) and the (meth) acrylate monomer (B) having the isobornyl group are mixed in a mass ratio of (A)/(B) = 1/1 to 8/1 to form an adhesive composition with excellent adhesive properties and heat resistance. When the amount of the polyester polyurethane acrylate (A) is recued below (A)/(B) = 1/1, the flexibility of the cured film decreases and the adhesive properties deteriorate. When the amount of the polyester polyurethane (meth)acrylate (A) exceeds (A)/(B) = 8/1, the cured film becomes too soft, weakening its heat resistance. The preferred (A)/(B) ratio is 1/1 to 6/1.

The polyester polyurethane acrylate (A) described above does not have to be one type; a mixture of two or more different types can be used. When two or more types are used, at least one of them is preferably a polyester polyurethane acrylate (A) with a glass transition temperature (Tg) of 40°C or lower, and by using a polyester polyurethane acrylate (A) with a low glass transition temperature (Tg), both the adhesive properties and the heat resistance can be achieved.

When two or more types are used, all of them may be the polyester polyurethane acrylate (A) with a glass transition temperature (Tg) of 40°C or less, or the polyester polyurethane acrylate (A) with a glass transition temperature (Tg) of 40°C or less and the polyester polyurethane acrylate (A) with a glass transition temperature (Tg) above 40°C may also be used.

In the following descriptions, the polyester polyurethane acrylate (A) with a glass transition temperature (Tg) of 40°C or less is referred to as a polyester polyurethane acrylate (A1), and the polyester polyurethane acrylate (A) with a glass transition temperature (Tg) of over 40°C is referred to as a polyester polyurethane acrylate (A2).

When using both the polyester polyurethane acrylate (A1) and the polyester polyurethane acrylate (A2), it is preferable that the polyester polyurethane acrylate (A2) is 75 parts by mass or less per 100 parts by mass of the polyester polyurethane acrylate (A1). When the polyester polyurethane acrylate (A2) exceeds 75 parts by mass, the flexibility of the first adhesive layer 12 after curing may decrease, and the adhesive properties between the barrier layer 11 and the heat-resistant resin layer 13 may deteriorate. The particularly preferred amount of the polyester polyurethane acrylate (A2) is 20 to 60 parts by mass relative to 100 parts by mass of the polyester polyurethane acrylate (A1).

For the polyester polyurethane acrylate (A), it is possible to use a reactant made by reacting a polyester polyol (a-1) as a polyol component, an isocyanate compound (a-2), and a hydroxy (meth)acrylate (a-3). The following starting materials and synthesis methods are common regardless of the glass transition temperature (Tg).

The polyester polyol (a-1) is obtained by dehydrative condensation of polybasic acid components, such as isophthalic acid, terephthalic acid, naphthalene dicarboxylic acid, phthalic anhydride, succinic acid, adipic acid, azelaic acid, sebacic acid, maleic acid, fumaric acid, itaconic acid and their anhydrides, tetrahydrophthalic anhydride, hexahydrophthalic anhydride, tetrabromophthalic anhydride, tetrachlorophthalic anhydride, hettic anhydride, hymic anhydride, either alone or in mixture, with polyhydric alcohols such as ethylene glycol, propylene glycol, diethylene glycol, dipropylene glycol, neopentyl glycol, triethylene glycol, tripropylene glycol, tetramethylene glycol, polyethylene glycol, polypropylene glycol, polytetramethylene ether glycol, 1,3-butylene glycol, 1,4-butanediol, 1,5-pentanediol, 1,6-hexanediol, 1,9-nonanediol, 2-methyl-1,8-octanediol, hydrogenated bisphenol A, glycerin, trimethylol ethane, trimethylolpropane, tris(hydroxymethyl)aminomethane, pentaerythritol, polyether polyols, polycarbonate polyols, acrylic polyols, and polyurethane polyols.

For the polyol component, polyols other than the polyester polyol (a-1) can also be used in combination. For example, low molecular weight polyols such as 1,6-hexanediol and trimethylolpropane, as well as polyether polyol, acrylic polyol, and polyurethane polyol, can be exemplified and used alone or in combination.

For the isocyanate compound (a-2), for example, 2,4-tolylene diisocyanate, 2,6-tolylene diisocyanate, 1,3-xylylene diisocyanate, 1,4-xylylene diisocyanate, 1,5-naphthalene diisocyanate, 1,3-phenylene diisocyanate, 1,4-phenylene diisocyanate, 3,3'-dimethylphenylene diisocyanate, 1,6-hexamethylene diisocyanate, isophorone diisocyanate, 4,4'-methylene bis (cyclohexyl isocyanate), 2,2,4-trimethylhexamethylene diisocyanate, norbornene diisocyanate, and the like, can be exemplified. Further, for the polyfunctional polyisocyanate compounds, biuret compounds, isocyanurate compounds, and trimethylolpropane adduct compounds thereof can be exemplified. For the isocyanate compounds having a (meth)acryloyl group, 2-isocyanatoethyl (meth)acrylate, 2-(2-methacryloyloxyethoxy) ethyl isocyanate, and 1,1-(bisacryloyloxymethyl) ethyl isocyanate can be exemplified. These can be used alone or in combination of two or more types.

For the hydroxy (meth)acrylate (a-3), examples of compounds with one (meth)acryloyl group include 2-hydroxyethyl (meth)acrylate, 2-hydroxypropyl (meth)acrylate, 2-hydroxybutyl (meth)acrylate, 4-hydroxybutyl (meth)acrylate, 2-hydroxy-3-phenyloxypropyl (meth)acrylate, 1,5-pentanediol mono(meth)acrylate, 1,6-hexanediol mono(meth)acrylate, cyclohexanedimethanol mono(meth)acrylate, polyether-modified hydroxyethyl (meth)acrylate, and caprolactone-modified hydroxyethyl (meth)acrylate. As compounds with two or more acryloyl groups, examples include trimethylolpropane di(meth)acrylate, trimethylolethane di(meth)acrylate, pentaerythritol di(meth)acrylate, pentaerythritol tri(meth)acrylate, dipentaerythritol di(meth)acrylate, dipentaerythritol tri(meth)acrylate, dipentaerythritol tetra(meth)acrylate, dipentaerythritol penta(meth)acrylate, and 2-hydroxy-3-acryloyloxypropyl (meth)acrylate. These can be used alone or in combination of two or more types. In addition, considering the reaction rate during synthesis, compounds with a primary hydroxyl group are preferable, and 2-hydroxyethyl (meth)acrylate is especially preferred.

The synthesis of the polyester polyurethane acrylate (A) can be carried out in a solvent if needed. Examples of these solvents include hydrocarbons other than alcohols, acetic acid esters, and ketones, and ethyl acetate and methyl ethyl ketone are preferable from the perspective of coating workability. In addition, known reaction promoters can be used in the synthesis of the polyester polyurethane acrylate (A), including metal-based catalysts such as dibutyltin diacetate, dibutyltin dilaurate, dioctyltin dilaurate, and dibutyltin dimaleate, as well as reactive tertiary amines, such as 1,8-diazabicyclo (5,4,0) undecene-7, 1,5-diazabicyclo(4,3,0)-nonene-5, and triethanolamine.

The adhesive composition described above may also contain a polyisocyanate that is not a component of the polyester polyurethane acrylate, or an isocyanate compound (X) with a radical polymerizable unsaturated bond, as a component to enhance adhesive properties. By incorporating the isocyanate compounds (X), the reaction between the hydroxyl groups in the adhesive cured product and the moisture adhering to the barrier layer 11 and the heat-resistant resin layer 13 of the object being bonded, with the isocyanate groups, enhances cohesive strength, resulting in superior adhesive properties. However, if the isocyanate compound described above is mixed in a rate of more than 25 mass%, the curing time will be longer, or moisture or other water may react with the isocyanate to produce carbon dioxide gas, which may cause bubbles to form in the adhesive layer. Therefore, it is preferable to keep the proportion of isocyanate compound in the adhesive composition to 25 mass% or less. The isocyanate compound (X) shown here is not a component of the polyester polyurethane acrylate (A).

The adhesive composition described above is cured by irradiating it with active energy rays such as ultraviolet rays, X-rays, visible light, alpha rays, beta rays, gamma rays, or electron beams (EB), forming the first adhesive 12, which bonds the barrier layer 11 and the heat-resistant resin layer 13. The first adhesive layer 12, which is a cured film of the adhesive composition described above, has high heat resistance, and even at high temperatures, the adhesive strength between the barrier layer 11 and the heat-resistant resin layer 13 is high, preventing delamination during heat sealing.

### [Auxiliary Components in First Adhesive Layer]

In addition to the above-described components, at least one of the following auxiliary components (C) to (F) may optionally be added to the adhesive composition.

The epoxy resin (C) is a component that contributes to improving the heat resistance of the first adhesive layer 12.

The above-described epoxy resin is a generic term for resins that contain epoxy groups within their molecules, as well as epoxy (meth)acrylate resins, which are obtained by modifying those resins and adding (meth)acryloyl groups within the molecules. Specifically, examples include bisphenol A-type epoxy resin, bisphenol F-type epoxy resin, alicyclic epoxy resin, novolac-type epoxy resin, and epoxy acrylate. For example, bisphenol A-type epoxy resins include those made by Mitsubishi Chemical Corporation, such as, JER 825, JER 827, JER 828, JER 1001, JER 1002, JER 1003, JER 1004, and JER 1032H60. Examples of bisphenol F-type epoxy resins include those made by Mitsubishi Chemical Corporation, such as JER 4004P and JER 4005P. Examples of alicyclic epoxy resins include those made by Daicel Corporation, such as Celoxide 2021P, Celoxide 2081, and Epolead GT401. Examples of novolak-type epoxy resins include those made by DIC Corporation, such as EPICLON N-660 and EPICLON N-740. Examples of epoxy acrylates include those made by Daicel-Ornex Corporation, such as EBECRYL 600, EBECRYL 3603, and EBECRYL 3700. These can be used alone or in combination with two or more types.

The content ratio of the epoxy resin (C) in the adhesive composition is preferably 0.1 mass% to 10 mass%. When the content ratio of the epoxy resin (C) exceeds 10 mass%, there is a risk that the adhesive properties may deteriorate.

The alkoxysilyl group-containing radical polymerizable compound (D) is a component that contributes to improving the adhesive properties of the barrier layer 11, i.e., to the metal material.

The above-described alkoxysilyl group-containing radical polymerizable compound (D) is not particularly limited as long as it is a radical polymerizable compound containing an alkoxysilyl group in the molecule. For example, vinyltrimethoxysilane, vinyltriethoxysilane, vinyltributoxysilane, allyltrimethoxysilane, 3-(meth) acryloxypropyltrimethoxysilane, 3-(meth)acryloxypropyltriethoxysilane, p-styryltrimethoxysilane, and organosiloxane obtained by condensing two or more of these compounds can be used alone or in combination of two or more.

The content ratio of the alkoxysilyl group-containing radical polymerizable compound (D) in the adhesive composition is preferably 0.1 mass% to 5 mass%. When it exceeds 5 mass%, there is a risk that the adhesive properties and heat resistance may decrease.

The phosphate group-containing (meth)acrylate (E) contributes to improving the adhesive properties to the barrier layer 11, i.e., the metal material.

The phosphate group-containing (meth)acrylate (E) can be used alone or in combination with other compounds, such as phosphorus compounds that do not contain (meth)acryloyl groups, but the phosphate group-containing (meth)acrylate (E) that participates in the cross-linking reaction is more preferable because it provides superior adhesive properties and durability. Examples of phosphate group-containing (meth) acrylates (E) include 2-(meth) acryloyloxyethyl acid phosphate and bis(2-(meth) acryloyloxyethyl) acid phosphate, such as those manufactured by Kyoeisha Chemical Co., Ltd. (Light Ester P-1M, Light Ester P-2M, Light Acrylate P-1A) and BASF (Laromer PA9083), which can be used alone or in combination with two or more types.

The content ratio of the phosphate group-containing (meth)acrylate (E) in the adhesive composition is preferably 0.1 mass% to 5 mass%. When it exceeds 5 mass%, there is a risk that the adhesive properties and heat resistance may decrease.

The photo-cationic polymerization initiator (F) is used as a polymerization initiator for the epoxy resin (C) and the alkoxysilyl group-containing radical polymerizable compound (D).

The above-described photo-cationic polymerization initiator (F) is an onium salt, such as an ionic aromatic sulfonium salt or an aromatic iodonium salt, which is composed of a cationic part and an anionic part, and is manufactured by, for example, IGM Resins B.V. (OmniCat 250, OmniCat 270), ADEKA Corporation (ADEKA Optomer SP series), and SunApro Corporation (CPI-100P, CPI-101A).

The content ratio of the photo-cationic polymerization initiator (F) in the adhesive composition is preferably 0.1 mass% to 5 mass% from the viewpoint of reactivity.

Furthermore, the adhesive composition may optionally include color pigments, extenders, dyes, tackifiers, dispersants, antifoamers, wetting agents, antistatic agents, thickeners, antioxidants, UV absorbers, radical scavengers, and other additives, as long as they do not impair the performance of the adhesive.

The adhesive composition described above hardens instantly when exposed to active energy rays, but a photo-radical polymerization initiator may be added to improve its curing properties.

The above-described photo-radical polymerization initiators include benzophenone, 2,2-dimethoxy-1,2-diphenylethane-1-one, 1-hydroxy-cyclohexyl-phenyl-ketone, 2-hydroxy-2-methyl-1-phenyl-propan-1-one, 1-[4-(2-hydroxyethoxy)phenyl]-2-hydroxy-2-methylpropane-1-one, 2-hydroxy-1-{4-[4-(2-hydroxy-2-methyl-propionyl)benzyl]phenyl}-2-methyl-propane-1-one, phenylglyoxylic acid methyl ester, 2-methyl-1-[4-(methylthio)phenyl]-2-morpholinopropan-1-one, 2-benzyl-2-dimethylamino-1-(4-morpholinophenyl)-butan-1-one, 2-dimethylamino-2-(4-methyl-benzyl)-1-(4-morpholin-4-yl-phenyl)-butan-1-one, bis(2,4,6-trimethylbenzoyl)-phenylphosphine oxide, 2,4,6-trimethylbenzoyl-diphenyl-phosphine oxide, 1,2-octanedione, ethanone, 1-[9-ethyl-6-(2-methylbenzoyl)-9H-carbazol-3-yl]-, 1-(O-acetyloxyimino) and others, which can be used alone or in combination.

The adhesive composition described above can be diluted with solvents such as hydrocarbons, acetic esters, ketones, and alcohols to adjust the viscosity according to the coating method and the specifications of the coating machine. From the viewpoint of workability, ethyl acetate and methyl ethyl ketone are preferable.

Furthermore, the adhesive composition described above can use a reactive diluent with radical polymerization properties to adjust viscosity, as long as it does not impair the relevant performance, in accordance with the coating method and specifications of the coating machine.

The above-described reactive diluents include 4-t-butylcyclohexyl (meth)acrylate, 2-(2-ethoxyethoxy)ethyl (meth)acrylate, stearyl (meth)acrylate, diethylene glycol monobutyl ether (meth)acrylate, tetrahydrofurfuryl (meth)acrylate, lauryl (meth)acrylate, isooctyl (meth)acrylate, tridecyl (meth)acrylate, isobornyl (meth)acrylate, and myristyl (meth)acrylate as monofunctional (meth)acrylates; 1,3-butylene glycol diacrylate, 1,4-butanediol di(meth)acrylate, ethylene glycol di(meth)acrylate, 1,6-hexanediol di(meth)acrylate, neopentyl glycol di(meth)acrylate, triethylene glycol di(meth)acrylate, tripropylene glycol di(meth)acrylate as difunctional (meth)acrylates; and polyfunctional (meth)acrylates such as trimethylolpropane tri(meth)acrylate, ethoxylated trimethylolpropane tri(meth)acrylate, and propoxylated glyceryl tri(meth)acrylate, which can be used alone or in combination.

### [Other Layers]

In the battery packaging material of the present invention, layers other than the first adhesive layer 12 can be made of well-known materials as appropriate, and the lamination method is not particularly limited. Hereinafter, suitable materials for the layers excluding the first adhesive layer 12 will be described.

### (Heat-resistant Resin Layer)

The heat-resistant resin layer 13 uses a heat-resistant resin film that does not melt at the heat-sealing temperature when heat-sealing the battery packaging material 1. As the heat-resistant resin described above, a heat-resistant resin having a melting point 10°C or more, preferably 20°C or more, higher than the melting point of the resin constituting the sealant layer 15 is used. Examples of resins that meet these conditions include polyamide films and polyester films, and stretched films of these are preferably used. Among these, as the above-described heat-resistant resin layer 13, it is particularly preferable to use a biaxially stretched polyester film such as a biaxially stretched polyamide film, a biaxially stretched polybutylene terephthalate (PBT) film, a biaxially stretched polyethylene terephthalate (PET) film, or a biaxially stretched polyethylene naphthalate (PEN) film. The polyamide film described above is not limited to any particular type, but examples include a 6 polyamide film, a 6,6 polyamide film, and an MXD polyamide film. Note that the heat-resistant resin layer 13 may be formed as a single layer, or it may be formed as a multilayer, such as a multiple layer composed of a polyester film/a polyamide film (e.g., a multiple layer composed of a PET film/a nylon film).

The thickness of the heat-resistant resin layer 13 is preferably between 7 µm and 50 µm. In addition to providing chemical resistance, such as protection from the electrolyte, it can ensure sufficient strength as a packaging material and reduce the stress during molding, such as stretch forming and drawing, thereby improving moldability. The even more preferable thickness of the heat-resistant resin layer 13 is 9 µm to 30 µm.

Furthermore, a protective layer containing a binder resin and solid fine particles may be laminated on the outer side of the heat-resistant resin layer 13. The protective layer imparts slipperiness to the surface of the battery packaging material to improve moldability, and also provides excellent chemical resistance, solvent resistance, and abrasion resistance.

### (Barrier Layer)

The barrier layer 11 is responsible for providing the battery packaging material 1 with gas barrier properties to prevent penetration of oxygen and moisture. The barrier layer 11 is not limited to any particular type, but examples include metal foil layers such as 1000 series, 3000 series, and 8000 series aluminum foils, SUS foils (stainless steel foils), copper foils, nickel foils, titanium foils, and clad foils. The thickness of the barrier layer 11 is preferably between 20 µm and 100 µm. When it is 20 µm or more, the occurrence of pinholes during rolling when producing a metal foil is prevented, and when it is 100 µm or less, the stress during the forming process such as stretch forming and drawing is reduced, thereby improving the moldability. The particularly preferred thickness of the barrier layer 11 is 25 µm to 85 µm.

Furthermore, it is preferable that the barrier layer 11 have an underlying layer formed on at least the side facing the heat-resistant resin layer 13. In the battery packaging material 2 shown in FIG. 2, underlying layers 16a and 16b are formed on the respective sides of the barrier layer 11. The underlying layer 16b on the side of the heat-resistant resin layer 13 has the effect of enhancing the adhesive strength by improving the adherence between the barrier layer 11 and the first adhesive layer 12, and it can prevent the occurrence of delamination between the barrier layer 11 and the heat-resistant resin layer 13. The underlying layer 16b on the side of the sealant layer 15 enhances the adhesiveness between the barrier layer 11 and the second adhesive layer 14, preventing delamination between the barrier layer 11 and the sealant layer 15, and also prevents corrosion of the metal foil surface by the contents (such as battery electrolyte) in the battery element chamber 54 of the battery case 60 (see FIG. 3).

As an example of the underlying layer 16a, 16b, a chemical conversion coating can be exemplified. The chemical conversion coating can be formed by applying a chemical conversion treatment to the barrier layer 11, for example, as follows.

After applying one of the aqueous solutions listed in the following 1) to 3) to the surface of the degreased barrier layer 11, it is dried to apply a chemical conversion treatment.
1) An aqueous solution of a mixture containing phosphoric acid, chromic acid, and at least one compound selected from the group consisting of metal salts of fluorides and non-metal salts of fluorides.
2) An aqueous solution of a mixture containing phosphoric acid, at least one resin selected from the group consisting of acrylic-based resins, chitosan derivative resins, and phenol-based resins, and at least one compound selected from the group consisting of chromic acid and chromium (III) salts.
3) An aqueous solution of a mixture containing phosphoric acid, at least one type of resin selected from the group consisting of acrylic-based resins, chitosan derivative resins, and phenol-based resins, at least one compound selected from the group consisting of chromic acid and a chromium (III) salt, and at least one compound selected from the group consisting of metal salts of fluoride and non-metal salts of fluoride.
The chromium adhesion amount (per one side) of the underlying layer 16a, 16b is preferably 0.1 mg/m² to 50 mg/m², particularly 2 mg/m² to 20 mg/m².

### (Sealant Layer)

The sealant layer 15 plays a role in providing excellent chemical resistance against highly corrosive electrolytes, etc., as well as providing heat sealing properties to the battery packaging material 1.

The resin constituting the sealant layer 15 is preferably a single or multilayer film made of a polyolefin-based resin such as a propylene-based resin, and is preferably a non-stretched film. As the propylene-based resin described above, examples include propylene-α olefin copolymers such as propylene-ethylene copolymers, propylene-butylene copolymers, as well as propylene polymers (homoPP). The propylene-α-olefin copolymer described above may be either a random copolymer or a block copolymer. As a multilayer film made of propylene-based polymers, a three-layer film composed of a propylene random copolymer, a propylene block copolymer, and a propylene random copolymer can be recommended. The multilayer film described above can be made using co-extrusion, etc.

The thickness of the sealant layer 15 described above is preferably 20 µm to 100 µm, and is even more preferable when it is 30 µm to 80 µm. Furthermore, the ratio of the thickness of each layer of the three-layer co-extruded film of the propylene random copolymer - propylene block copolymer - propylene random copolymer described above is preferably 1 to 3: 4 to 8: 1 to 3, with the total thickness being 10.

The sealant layer 15 may contain additives such as lubricants and anti-blocking agents. There are no particular restrictions on the lubricants used in the sealant layer 15, but examples include saturated fatty acid amides, unsaturated fatty acid amides, substituted amides, methyrol amides, saturated fatty acid bisamides, unsaturated fatty acid bisamides, fatty acid ester amides, and aromatic bisamides.

The saturated fatty acid amides described above are not specifically limited, but examples include lauramide, palmitamide, stearamide, behenamide, and hydroxystearic acid amide. The unsaturated fatty acid amides described above are not specifically limited, but examples include oleamide and erucamide.

The substituted amides described above are not specifically limited, but examples include N-oleyl palmitamide, N-stearyl stearamide, N-stearyl oleamide, N-oleyl stearamide, and N-stearyl erucamide. Furthermore, the methylolamide described above is not specifically limited, but an example includes methylol stearamide.

The saturated fatty acid bisamide described above is not specifically limited, but examples include methylenebisstearic acid amide, ethylenebiscapric acid amide, ethylenebislauric acid amide, ethylenebistearic acid amide, ethylenebishydroxystearic acid amide, ethylenebis bis-behenamide, hexamethylene bis-stearamide, hexamethylene bis-behenamide, hexamethylene hydroxystearic acid amide, N,N'-distearyl adipamide, N,N'-distearyl sebacamide, etc.

The unsaturated fatty acid bisamide described above is not specifically limited, but examples include ethylene bisoleamide, ethylene biserucamide, hexamethylene bisolecamide, and N,N'-dioleyl sebacic acid amide.

The fatty acid ester amide described above is not specifically limited, but an example includes stearoylamide ethyl stearate. The aromatic bisamides described above are not specifically limited, but examples include m-xylene bisstearamide, m-xylene bishydroxystearic acid amide, and N,N'-distearyl isophthalic acid amide. The lubricant concentration is preferably between 300 ppm and 5000 ppm, even more preferably between 500 ppm and 3000 ppm. Further, it is preferable that the inner surface of the sealant layer have a lubricant present on it in an amount of 0.1 µg/cm² to 1.0 µg/cm².

The anti-blocking agent is not specifically limited, but examples include silica particles, acrylic resin particles, and aluminum silicate particles. The particle diameter of the anti-blocking agent described above is preferably in the range of 0.1 µm to 10 µm in average particle diameter, more preferably in the range of 1 µm to 5 µm in average particle diameter. The concentration of the anti-blocking agent described above is preferably set between 100 ppm and 5000 ppm.

### (Second Adhesive Layer)

The second adhesive layer 14 is not particularly limited, but examples of recommended adhesives include those containing one or more types of polyurethane-based resin, acryl-based resin, epoxy-based resin, polyolefin-based resin, elastomer-based resin, fluorine-based resin, or acid-modified polypropylene resin. Among them, adhesives made of polyurethane composite resin with acid-modified polyolefin as the main agent are preferable. In addition, the preferred thickness of the second adhesive layer 14 is 2 µm to 5 µm for dry lamination methods and the like, and 3 µm to 20 µm for sand lamination methods, thermal lamination methods, and the like.

In addition, the same type of active energy curing adhesive composition as the first adhesive layer 12 can be used for the second adhesive layer 14.

### [Battery Case and Battery]

The battery 60 shown in FIG. 3 is equipped with a battery case 50 made using the battery packaging material 1 of the present invention.

The battery case 50 is composed of a formed container 51 and a lid 52, and is produced by forming a battery element chamber 54 with the sealant layer 15 serving as the inner surface, by bringing the sealant layers 15 of the formed container 51 and the lid 52 face to face and heat-sealing the edges.

Further, the battery 60 is produced by accommodating a battery element 55, which includes a positive electrode, a negative electrode, separators, and an electrolyte, in the battery element chamber 54 of the battery case 50.

Because the battery case 50 for the battery 60 is produced using the battery packaging material 1, the barrier layer 11 and the heat-resistant resin layer 13 do not delaminate, even during heat-sealing of the battery case 50 or when the battery 60 is used in a high-temperature environment.

### (Example]

### [Production of Battery Packaging Material]

Battery packaging materials 1 and 2, with the structures shown in FIGS. 1 and 2, were prepared by changing the material of the first adhesive layer 12.

### (Materials for Adhesive Compositions)

The following three compounds α1, α2, and α3 were synthesized as polyester polyurethane acrylate (A1) with a glass transition temperature (Tg) of 40°C or less.

### (α1)

In a flask equipped with a nitrogen inlet tube, a stirrer, a rectification column, and a condenser, neopentyl glycol (190 g), 1,6-hexanediol (200 g), ethylene glycol (50 g), isophthalic acid (420 g), adipic acid (20 g), and sebacic acid (100 g) were added, and the mixture was dehydrated and condensed at 180°C to 200°C while stirring. After confirming that the resin acid value reached 15 mgKOH/g, the dehydration reaction was further promoted at 200°C to 240°C while performing nitrogen bubbling. After that, the resin acid value was confirmed to be 2 mgKOH/g or less, and the internal pressure was reduced to 15 Torr to continue the reaction. When the resin acid value was confirmed to be 0.1 mgKOH/g or less, a polyester polyol with a number average molecular weight of 4100 and a hydroxyl value of 27.4 mgKOH/g was obtained.

The obtained polyester polyol was cooled to 20°C, and then dibutyltin dilaurate (0.2g) and tolylene diisocyanate (55.4g) were added, and the mixture was reacted at 80°C to 85°C under a nitrogen gas flow for 6 hours to obtain a urethane prepolymer with isocyanate groups at both ends.

2-Hydroxyethyl acrylate (30.8g) was added to the obtained urethane prepolymer, and the reaction was allowed to proceed at 80°C to 85°C. The reaction was allowed to proceed, and the synthesis was terminated after confirming that the absorption of the isocyanate group completely disappeared in the infrared absorption spectrum. Polyester polyurethane acrylate with a number average molecular weight of 15,000 and a glass transition temperature (Tg) of -10°C was obtained.

### (α2)

In a flask equipped with a nitrogen inlet tube, a stirrer, a rectification column, and a condenser, neopentyl glycol (120 g), 1,6-hexanediol (234 g), ethylene glycol (47 g), isophthalic acid (400 g), adipic acid (179 g), and sebacic acid (20 g) were added, and the mixture was dehydrated and condensed at 180°C to 200°C while stirring. After confirming that the resin acid value reached 15 mgKOH/g, the dehydration reaction was further promoted at 200°C to 240°C while performing nitrogen bubbling. After that, the resin acid value was confirmed to be 2 mgKOH/g or less, and the internal pressure was reduced to 15 Torr to continue the reaction. When the resin acid value was confirmed to be 0.1 mgKOH/g or less, a polyester polyol with a number average molecular weight of 4400 and a hydroxyl value of 25.5 mgKOH/g was obtained.

The obtained polyester polyol was cooled to 20°C, and then dibutyltin dilaurate (0.2g) and tolylene diisocyanate (61.5g) were added, and the mixture was reacted at 80°C to 85°C under a nitrogen gas flow for 6 hours to obtain a urethane prepolymer with isocyanate groups at both ends.

2-Hydroxyethyl acrylate (35.9g) was added to the obtained urethane prepolymer, and the reaction was allowed to proceed at 80°C to 85°C. The reaction was allowed to proceed, and the synthesis was terminated after confirming that the absorption of the isocyanate group completely disappeared in the infrared absorption spectrum. Polyester polyurethane acrylate with a number average molecular weight of 8000 and a glass transition temperature (Tg) of - 20°C was obtained.

### (α3)

In a flask equipped with a nitrogen inlet tube, a stirrer, a rectification column, and a condenser, neopentyl glycol (160 g), 1,6-hexanediol (210 g), ethylene glycol (50 g), isophthalic acid (405 g), adipic acid (100 g), and sebacic acid (65 g) were added, and the mixture was dehydrated and condensed at 180°C to 200°C while stirring. After confirming that the resin acid value reached 15 mgKOH/g, the dehydration reaction was further promoted at 200°C to 240°C while performing nitrogen bubbling. After that, the resin acid value was confirmed to be 2 mgKOH/g or less, and the internal pressure was reduced to 15 Torr to continue the reaction. When the resin acid value was confirmed to be 0.1 mgKOH/g or less, a polyester polyol with a number average molecular weight of 4350 and a hydroxyl value of 26.3 mgKOH/g was obtained.

The obtained polyester polyol was cooled to 20°C, and then dibutyltin dilaurate (0.2g) and tolylene diisocyanate (56.1g) were added, and the mixture was reacted at 80°C to 85°C under a nitrogen gas flow for 6 hours to obtain a urethane prepolymer with isocyanate groups at both ends.

2-Hydroxyethyl acrylate (32.5g) was added to the obtained urethane prepolymer, and the reaction was allowed to proceed at 80°C to 85°C. The reaction was allowed to proceed, and the synthesis was terminated after confirming that the absorption of the isocyanate group completely disappeared in the infrared absorption spectrum. Polyester polyurethane acrylate with a number average molecular weight of 11000 and a glass transition temperature (Tg) of - 13°C was obtained.

The following four compounds α11, α12, α13, and α14 were synthesized as the polyester polyurethane acrylate (A2) with a glass transition temperature (Tg) of 40°C or above.

### (α11)

In a flask equipped with a nitrogen inlet tube, a stirrer, a rectification column, and a condenser, neopentyl glycol (130 g), 1,6-hexanediol (180 g), ethylene glycol (80 g), isophthalic acid (310 g), and terephthalic acid (300g) were added, and the mixture was dehydrated and condensed at 180°C to 200°C while stirring. After confirming that the resin acid value reached 15 mgKOH/g, the dehydration reaction was further promoted at 200°C to 240°C while performing nitrogen bubbling. After that, the resin acid value was confirmed to be 2 mgKOH/g or less, and the internal pressure was reduced to 15 Torr to continue the reaction. When the resin acid value was confirmed to be 0.1 mgKOH/g or less, a polyester polyol with a number average molecular weight of 5800 and a hydroxyl value of 19.3 mgKOH/g was obtained.

The obtained polyester polyol was cooled to 20°C, and then dibutyltin dilaurate (0.2g) and tolylene diisocyanate (38.5g) were added, and the mixture was reacted at 80°C to 85°C under a nitrogen gas flow for 6 hours to obtain a urethane prepolymer with isocyanate groups at both ends.

2-Hydroxyethyl acrylate (20.0g) was added to the obtained urethane prepolymer, and the reaction was allowed to proceed at 80°C to 85°C. The reaction was allowed to proceed, and the synthesis was terminated after confirming that the absorption of the isocyanate group completely disappeared in the infrared absorption spectrum. Polyester polyurethane acrylate with a number average molecular weight of 6000 and a glass transition temperature (Tg) of 50°C was obtained.

### (α12)

In a flask equipped with a nitrogen inlet tube, a stirrer, a rectification column, and a condenser, neopentyl glycol (130 g), 1,6-hexanediol (177 g), ethylene glycol (82 g), isophthalic acid (310 g), and terephthalic acid (301g) were added, and the mixture was dehydrated and condensed at 180°C to 200°C while stirring. After confirming that the resin acid value reached 15 mgKOH/g, the dehydration reaction was further promoted at 200°C to 240°C while performing nitrogen bubbling. After that, the resin acid value was confirmed to be 2 mgKOH/g or less, and the internal pressure was reduced to 15 Torr to continue the reaction. When the resin acid value was confirmed to be 0.1 mgKOH/g or less, a polyester polyol with a number average molecular weight of 5820 and a hydroxyl value of 19.2 mgKOH/g was obtained.

The obtained polyester polyol was cooled to 20°C, and then dibutyltin dilaurate (0.2g) and tolylene diisocyanate (38.4g) were added, and the mixture was reacted at 80°C to 85°C under a nitrogen gas flow for 6 hours to obtain a urethane prepolymer with isocyanate groups at both ends.

2-Hydroxyethyl acrylate (19.3g) was added to the obtained urethane prepolymer, and the reaction was allowed to proceed at 80°C to 85°C. The reaction was allowed to proceed, and the synthesis was terminated after confirming that the absorption of the isocyanate group completely disappeared in the infrared absorption spectrum. Polyester polyurethane acrylate with a number average molecular weight of 6230 and a glass transition temperature (Tg) of 51°C was obtained.

### (α13)

In a flask equipped with a nitrogen inlet tube, a stirrer, a rectification column, and a condenser, neopentyl glycol (130 g), 1,6-hexanediol (173 g), ethylene glycol (85 g), isophthalic acid (310 g), and terephthalic acid (302g) were added, and the mixture was dehydrated and condensed at 180°C to 200°C while stirring. After confirming that the resin acid value reached 15 mgKOH/g, the dehydration reaction was further promoted at 200°C to 240°C while performing nitrogen bubbling. After that, the resin acid value was confirmed to be 2 mgKOH/g or less, and the internal pressure was reduced to 15 Torr to continue the reaction. When the resin acid value was confirmed to be 0.1 mgKOH/g or less, a polyester polyol with a number average molecular weight of 5850 and a hydroxyl value of 19.1 mgKOH/g was obtained.

The obtained polyester polyol was cooled to 20°C, and then dibutyltin dilaurate (0.2g) and tolylene diisocyanate (38.2g) were added, and the mixture was reacted at 80°C to 85°C under a nitrogen gas flow for 6 hours to obtain a urethane prepolymer with isocyanate groups at both ends.

2-Hydroxyethyl acrylate (18.7g) was added to the obtained urethane prepolymer, and the reaction was allowed to proceed at 80°C to 85°C. The reaction was allowed to proceed, and the synthesis was terminated after confirming that the absorption of the isocyanate group completely disappeared in the infrared absorption spectrum. Polyester polyurethane acrylate with a number average molecular weight of 6460 and a glass transition temperature (Tg) of 52°C was obtained.

### (α14)

In a flask equipped with a nitrogen inlet tube, a stirrer, a rectification column, and a condenser, neopentyl glycol (130 g), 1,6-hexanediol (168 g), ethylene glycol (89 g), isophthalic acid (310 g), and terephthalic acid (303g) were added, and the mixture was dehydrated and condensed at 180°C to 200°C while stirring. After confirming that the resin acid value reached 15 mgKOH/g, the dehydration reaction was further promoted at 200°C to 240°C while performing nitrogen bubbling. After that, the resin acid value was confirmed to be 2 mgKOH/g or less, and the internal pressure was reduced to 15 Torr to continue the reaction. When the resin acid value was confirmed to be 0.1 mgKOH/g or less, a polyester polyol with a number average molecular weight of 5890 and a hydroxyl value of 19.0 mgKOH/g was obtained.

The obtained polyester polyol was cooled to 20°C, and then dibutyltin dilaurate (0.2g) and tolylene diisocyanate (37.9g) were added, and the mixture was reacted at 80°C to 85°C under a nitrogen gas flow for 6 hours to obtain a urethane prepolymer with isocyanate groups at both ends.

2-Hydroxyethyl acrylate (17.4g) was added to the obtained urethane prepolymer, and the reaction was allowed to proceed at 80°C to 85°C. The reaction was allowed to proceed, and the synthesis was terminated after confirming that the absorption of the isocyanate group completely disappeared in the infrared absorption spectrum. Polyester polyurethane acrylate with a number average molecular weight of 6920 and a glass transition temperature (Tg) of 54°C was obtained. Examples of the (meth)acrylate monomers (B) having the isobornyl group include isobornyl acrylate, isobornyl methacrylate, and the like.

As the (meth)acrylate monomer (B) having an isobornyl group, isobornyl acrylate (light acrylate IB-XA manufactured by Kyoeisha Chemical Co., Ltd.; glass transition temperature of the homopolymer is 94°C) was used.

As the isocyanate compound (X) that is not a component of the polyester polyurethane acrylate (A1) (A2) described above, TAKENATE D170N manufactured by Takeda Pharmaceutical Company Limited was used.

As the epoxy resin (C), jER1032H60 manufactured by Mitsubishi Chemical Corporation was used.

As the alkoxysilyl group-containing radical polymerizable compound (D), X-40-9296 manufactured by Shin-Etsu Chemical Co., Ltd. was used.

As the phosphate group-containing (meth)acrylate (E), Light Ester P-2M (2-methacryloyloxyethyl acid phosphate) manufactured by Kyoeisha Chemical Co., Ltd. was used.

As the photo-cationic polymerization initiator (F), Omnicat 250 manufactured by GM Resins B.V. was used.

Adhesive compositions of Examples 1 to 17 and Comparative Examples 1 to 4 were prepared by combining the above-described materials. The types of (A1) and (A2) used in each Example and the proportions of each component are shown in Table 1.

### (Examples 1 to 18)

An adhesive composition was prepared by combining the α1 polyester polyurethane acrylate (A1), the isobornyl acrylate (B), the isocyanate compound (X), and the auxiliary agents (C, D, E, F). In this Example, the polyester polyurethane acrylate (A2) was not used.

### (Examples 1 to 4, 6, 16, Comparative Examples 1 to 2)

An adhesive composition was prepared by combining the α1 or α2 polyester polyurethane acrylate (A1), any of the polyester polyurethane acrylates (A2) of α11 to α14, the isobornyl acrylate (B), and the auxiliary agents (C, D, E, F). In this Example, the isocyanate compound (X) was not used.

### (Example 5)

An adhesive composition was prepared by combining the α1 polyester polyurethane acrylate (A1), the isobornyl acrylate (B), and the auxiliary agents (C, D, E, F). In this example, the polyester polyurethane acrylate (A2) and the isocyanate compound (X) were not used.

### (Example 17)

An adhesive composition was prepared using the α1 polyester polyurethane acrylate (A1) and the isobornyl acrylate (B). In this Example, the polyester polyurethane acrylate (A2), isocyanate compound (X), and the auxiliary agents (C, D, E, F) were not used.

### (Comparative Example 3)

An adhesive composition was prepared by combining the α3 polyester polyurethane acrylate (A1), the α12 polyester polyurethane acrylate (A2), ethylene glycol diacrylate as the acrylate monomer instead of the isobornyl acrylate (B), and the auxiliary agents (C, D, E, F). In this Example, the isocyanate compound (X) was not used. The amount of ethylene glycol diacrylate is shown in the isobornyl acrylate (B) column, and the mass ratio of (A1) and ethylene glycol diacrylate is shown in the A1/B column.

### [Production of Battery Packaging Material]

The laminated battery structural materials shown in FIGS. 1 and 2 were prepared using the adhesive compositions described above as the first adhesive layer 12.

The materials other than those for the first adhesive layer 12 were the same and are as follows.

As the barrier layer 11, an aluminum foil made of A8079 with a thickness of 40 µm was used.

A biaxially stretched 6 nylon film having a thickness of 15 µm was used as the heat-resistant resin layer 13.

As the sealant layer 15, a 30 µm thick non-stretched polypropylene film containing 3000 ppm erucamide was used.

As the second adhesive layer 14, the same adhesive composition as the first adhesive layer 12 was used.

### (Examples 1 to 15, 17, Comparative Examples 1 to 4)

A chemical conversion processing solution made from polyacrylic acid (acrylic-based resin), chromium (III) salt compounds, water, and alcohol were applied to both sides of the barrier layer 11, and then dried at 150°C to form a chemical conversion coating. The chromium adhesion amount of this chemical conversion coating was 5 mg/m² per side, and this chemical conversion coating was used as the underlying layer 16a, 16b.

The adhesive compositions of the above-described Examples were adjusted to a viscosity of 25 mass% solids using ethyl acetate, and a bar coater was used to apply a coating to one side of the barrier layer 11, which had an underlying layer 16a and 16b on both sides, with a dry coating weight of 4.5 g/m² (thickness after curing was 4 µm). The ethyl acetate was then volatilized using a dryer to form the first adhesive layer 12, and the heat-resistant resin layer 13 was affixed. Further, a second adhesive layer 14 with a thickness of 2 µm was formed on the other side of the above-described barrier layer 11 in the same way as the formation of the first adhesive layer 12, and a sealant layer 15 was bonded to it. The laminate was then nipped on a hot plate at 60°C. After that, UV irradiation equipment was used to irradiate both sides with UV light at 300 mJ/cm² x 3 seconds, and a battery packaging material 2 was obtained as shown in FIG. 2.

### (Example 16)

A battery packaging material 1 having a laminated structure as shown in FIG. 1 was produced by laminating each layer using the same method as in Example 1, except that the underlying layers 16a and 16b were not formed on the barrier layer 11.

### [Evaluation of Battery Packaging Material]

The sealability, the hot-water resistance, the humidity and heat resistance, and the high temperature lamination strength of the battery packaging materials 1 and 2 were tested and evaluated using the following methods. The results are shown in Table 1.

### (Sealing Resistance)

A battery case 50, as shown in FIG. 3, was prepared using battery packaging materials 1 and 2, and a heat seal test was performed. The battery case 60 described above was composed of a formed container 51 and a flat lid plate 52. Note that the battery case 60 in FIG. 3 uses the battery packaging material 1, but since the battery case using the battery packaging material 2 has the same shape, FIG. 3 can also represent the battery case using the battery packaging material 2.

The formed container 51 was prepared by subjecting the sheet-shaped battery packaging material 1, 2 to deep drawing using a deep drawing tool manufactured by Amada Co., Ltd., to form a substantially rectangular parallelepiped shape (a roughly rectangular parallelepiped shape with one open side) with dimensions of 55 mm in length, 35 mm in width, and 5 mm in depth. The part that extends outward from the edge of the rectangular opening was trimmed, leaving a 20 mm wide flange 53. The above-described formed container 51 had a heat-resistant resin layer 13 on its exterior and a sealant layer 15 on its interior. The lid 52 was prepared by cutting the battery packaging material 1 into a rectangular shape with the same external dimensions as the flange 53 of the formed container 51. Five sets of the above-described formed container 51 and lid plate 52 were prepared.

The battery case was assembled by overlapping the sealant layer 15 side of the lid plate 52 onto the formed container 51, and the overlapped flange 53 parts were sandwiched between heaters and heated at 70°C for 6 seconds to heat seal. In this way, five heat-sealed battery cases 50 were obtained.

The five battery cases 50 were visually inspected after heat sealing to check for the occurrence of delamination and surface blistering in the heat-sealed portion. The results were then evaluated based on the following criteria.

⊚: No delamination was observed, and there was no surface blistering (pass)
○: Although a slight delamination occurred in rare cases, there was virtually no delamination and no surface blistering (pass).
×: Delamination occurred, and there was also surface lifting (unacceptable).

### (Hot-Water Resistance)

After immersing five battery cases 50 in the above-described sealability test in hot water at 85°C for 240 hours, they were removed and examined visually for the presence or absence of delamination in the heat-sealed portion and for any surface blistering of the exterior, and evaluated based on the following criteria.

⊚: No delamination was observed, and there was no surface blistering (pass)
○: Although a slight delamination occurred in rare cases, there was virtually no delamination and no surface blistering (pass).
×: Delamination occurred, and there was also surface blistering (unacceptable).

### (Humidity and Heat Resistance)

A sheet-shaped battery packaging material 1, 2 was deep-drawn into a roughly rectangular shape (a roughly rectangular shape with one side open) with dimensions of 55 mm (length) x 35 mm (width) x 7 mm (forming depth) using deep-drawing tools manufactured by Amada Co., Ltd., to produce the formed container 51. These formed containers 51 were stored in a constant temperature and humidity chamber at 85°C and 85% RH for 7 days.

The formed container 51 was checked after 24 hours and 120 hours of storage, and evaluated based on the following criteria.

⊚: No delamination after 120 hours
○: No delamination after 24 hours, but delamination occurred after 120 hours
×: Delamination occurred after 24 hours

### <High Temperature Lamination Strength Test>

A test piece with a width of 15 mm and a length of 150 mm was cut out from the battery packaging material 1, 2, and the barrier layer 11 and the heat-resistant resin layer 13 were peeled off in the area from one end of the test piece to a position 10 mm inward from the one longitudinal end of the test piece.

In accordance with JIS K6854-3 (1999), using a Shimadzu Stograph (AGS-5kNX), a laminate including the barrier 11 was clamped and fixed in place with one chuck, and the heat-resistant resin layer 13 that had been peeled off was clamped and fixed in place with the other chuck. After holding for one minute under a temperature environment of 120°C, the peel strength was measured when the sample was peeled in a T-shape at a tensile speed of 100 mm/min under the same temperature environment, and the value at which this measurement stabilized was taken as the "high-temperature laminate strength (N/15mm). The measurement results were evaluated based on the following criteria.

### (Evaluation Criteria)

⊚: 2.0N/15mm or more
○: 1.5 N/15 mm or more, less than 2.0 N/15 mm
×: Less than 1.5 N/15 mm

**Table 1**

| | | Adhesive composition of first adhesive agent layer | | | | | | | | | | | | | | Presence or absence of underlying layer | Evaluation of battery packaging material | | | |
|---|---|---|---|---|---|---|---|---|---|---|---|---|---|---|---|---|---|---|---|---|
| | | Polyester Polyurethane Acrylate (A) | | | | | | Isobornyl acrylate B Mass parts | Mass ratio | | Content of additives in adhesive comp onents (%) | | | | Isocyanate compound X Mass parts | | | | | |
| | | A1 | | | A2 | | | | A1/ B | A2 to A1 Note 1 | | | | | | | Sealability | Hot-water resistance | Humidity and heat resistance | High-temperature lamination strength |
| | | Type | Tg °C | Mass parts | Type | Tg °C | Mass parts | | | | C | D | E | F | | | | | | |
| | 1 | α1 | -10 | 65.0 | | | | 15 | 4.3 | 0 | 5 | 3 | 3 | 3 | 20 | Presence | ⊚ | ⊚ | ⊚ | ⊚ |
| | 2 | α1 | -10 | 53.8 | α11 | 50 | 21.4 | 10.8 | 5.0 | 40 | 5 | 3 | 3 | 3 | | Presence | ⊚ | ⊚ | ⊚ | ⊚ |
| | 3 | α1 | -10 | 53.8 | α12 | 51 | 14.4 | 35.8 | 1.0 | 40 | 5 | 3 | 3 | 3 | | Presence | ⊚ | ⊚ | ⊚ | ⊚ |
| | 4 | α1 | -10 | 56.3 | α13 | 52 | 22.7 | 7.0 | 8.0 | 40 | 5 | 3 | 3 | 3 | | Presence | ⊚ | ⊚ | ⊚ | ⊚ |
| | 5 | α1 | -10 | 71.7 | | | | 14.3 | 5.0 | 0 | 5 | 3 | 3 | 3 | | Presence | ⊚ | ⊚ | ⊚ | ⊚ |
| | 6 | α1 | -10 | 44.1 | α14 | 54 | 33.1 | 8.8 | 5.0 | 75 | 5 | 3 | 3 | 3 | | Presence | ⊚ | ⊚ | ⊚ | ⊚ |
| | 7 | α2 | -20 | 53.8 | α11 | 50 | 21.4 | 10.8 | 5.0 | 40 | 5 | 3 | 3 | 3 | | Presence | ⊚ | ⊚ | ⊚ | ⊚ |
| | 8 | α1 | -10 | 53.8 | α11 | 50 | 21.4 | 10.8 | 5.0 | 40 | 1 | 5 | 5 | 3 | | Presence | ⊚ | ⊚ | ⊚ | ⊚ |
| | 9 | α1 | -10 | 53.8 | α11 | 50 | 21.4 | 10.8 | 5.0 | 40 | 10 | 1 | 2 | 3 | | Presence | ⊚ | ⊚ | ⊚ | ○ |
| Ex. | 10 | α1 | -10 | 53.8 | α11 | 50 | 21.4 | 10.8 | 5.0 | 40 | 7.5 | 0.5 | 3 | 3 | | Presence | ⊚ | ⊚ | ⊚ | ⊚ |
| | 11 | α1 | -10 | 53.8 | α11 | 50 | 21.4 | 10.8 | 5.0 | 40 | 4 | 4 | 3 | 3 | | Presence | ⊚ | ⊚ | ○ | ⊚ |
| | 12 | α1 | -10 | 53.8 | α11 | 50 | 21.4 | 10.8 | 5.0 | 40 | 7.5 | 3 | 0.5 | 3 | | Presence | ⊚ | ⊚ | ⊚ | ⊚ |
| | 13 | α1 | -10 | 53.8 | α11 | 50 | 21.4 | 10.8 | 5.0 | 40 | 4 | 3 | 4 | 3 | | Presence | ⊚ | ⊚ | ○ | ⊚ |
| | 14 | α1 | -10 | 53.8 | α11 | 50 | 21.4 | 10.8 | 5.0 | 40 | 7.5 | 3 | 3 | 3 | | Presence | ⊚ | ⊚ | ⊚ | ⊚ |
| | 15 | α1 | -10 | 53.8 | α11 | 50 | 21.4 | 10.8 | 5.0 | 40 | 4 | 3 | 3 | 3 | | Presence | ⊚ | ⊚ | ⊚ | ⊚ |
| | 16 | α1 | -10 | 53.8 | α11 | 50 | 21.4 | 10.8 | 5.0 | 40 | 5 | 3 | 3 | 3 | | Absent | ○ | ⊚ | ⊚ | ○ |
| | 17 | α1 | -10 | 83.4 | | | | 16.6 | 5.0 | 0 | | | | | | Presence | ○ | ○ | ⊚ | ○ |
| | 18 | α1 | -10 | 50.0 | | | | 25.0 | 2.0 | 0 | 5 | 3 | 3 | 3 | 25 | Presence | ⊚ | ○ | ⊚ | ⊚ |
| Co mp. Ex. | 1 | α1 | -10 | 25.3 | α11 | 50 | 10.1 | 50.6 | 0.5 | 40 | 5 | 3 | 3 | 3 | | Presence | ⊚ | ⊚ | ⊚ | × |
| | 2 | α1 | -10 | 56.7 | α11 | 50 | 22.6 | 6.7 | 8.5 | 40 | 5 | 3 | 3 | 3 | | Presence | ⊚ | × | ⊚ | ⊚ |
| | 3 | α3 | -13 | 53.8 | α12 | 51 | 21.4 | (10.8) | (5.0) | 40 | 5 | 3 | 3 | 3 | | Presence | ⊚ | ⊚ | ⊚ | × |

| | | | | | | | | | | | | | | | | | | | | |
|---|---|---|---|---|---|---|---|---|---|---|---|---|---|---|---|---|---|---|---|---|
| Note 1: Mass parts of (A2) converted to 100 mass parts of (A1) | | | | | | | | | | | | | | | | | | | | |

From the results in Table 1, it was confirmed that the adhesive composition used in Examples could be used to obtain high temperature strength and prevent delamination.

This application claims priority to Japanese Patent Application No. 2022-120392 filed on July 28, 2022, the disclosure of which is incorporated by reference in its entirety.

It should be recognized that the terms and expressions used herein are for illustrative purposes only, are not to be construed as limiting, do not exclude any equivalents of the features shown and described herein, and allow for various variations within the claimed scope of this invention. It must be recognized that the present invention does not exclude any equivalents of the features shown and described herein, but permits various variations within the claimed scope of the invention.

### Industrial Applicability

The battery packaging material according to the present invention can be suitably used as a case material for lithium-ion secondary batteries, especially for small portable devices, such as those for automobiles, stationary use, notebook PCs, mobile phones, and cameras.

### Description of Reference Symbols

- 2:: Battery packaging material
- 11:: Barrier layer
- 12:: First adhesive layer
- 13:: Heat-resistant resin layer
- 14:: Second adhesive layer
- 15:: Sealant layer
- 16A, 16b:: =Underlying layer
- 50:: Battery case
- 60:: Battery

## Claims

1. A battery packaging material in which a heat-resistant resin layer is bonded to one side of a barrier layer via a first adhesive layer, and a sealant layer is bonded to the other side of the barrier layer via a second adhesive layer, **characterized in that**
the first adhesive layer is composed of an adhesive composition containing a polyester polyurethane acrylate (A) and a (meth)acrylate monomer (B) having an isobornyl group in a mass ratio of (A)/(B) = 1/1 to 8/1.

2. The battery packaging material as recited in claim 1,
wherein the adhesive composition includes two or more types of polyester polyurethane acrylates (A) with different glass transition temperatures, and the glass transition temperature of at least one of the polyester polyurethane acrylates (A) is 40°C or lower.

3. The battery packaging material as recited in claim 1 or 2,
wherein the adhesive composition further includes at least one of an epoxy resin (C), an alkoxysilyl group-containing radical polymerizable compound (D), a phosphate group-containing (meth)acrylate (E), and a photo-cationic polymerization initiator (F).

4. The battery packaging material as recited in claim 1 or 2,
wherein the adhesive composition further includes at least one of 1 mass% to 10 mass% of the epoxy resin (C), 0.1 mass% to 5 mass% of the alkoxysilyl group-containing radical polymerizable compound (D), 0.1 mass% to 5 mass% of th phosphate group-containing (meth)acrylate (E), and 0.1 mass% to 5 mass% of the photo-cationic polymerization initiator (F).

5. The battery packaging material as recited in claim 1 or 2,
wherein an underlying layer is formed at least on a heat-resistant resin layer side surface of the barrier layer.

6. A battery case **characterized in that** the battery packaging materials as recited in claim 1 or 2 are fitted with the sealant layers facing inward, and edges of the the battery packaging materials are heat-sealed to form a battery element chamber for accommodating a battery element.

7. A secondary battery **characterized in that** a battery element is accommodated in the battery element chamber of the battery case as recited in claim 6.
